# EUROPÄISCHE PATENTSCHRIFT

(11) **EP 0 815 413 B1**
(45) Veröffentlichungstag und Bekanntmachung des Hinweises auf die Patenterteilung: **30.05.2001**
(21) Anmeldenummer: 97901066.7
(22) Anmeldetag: 17.01.1997
(51) Int. Cl.: G01C 15/02, G02B 5/122, G01B 11/00

(54) **MESSKUGEL-REFLEKTOR**
MEASURING BALL REFLECTOR
REFLECTEUR DE BILLE DE MESURE

(30) Priorität: 24.01.1996 DE 19602327
(43) Veröffentlichungstag der Anmeldung: 07.01.1998
(73) Patentinhaber: Leica Geosystems AG, 9435 Heerbrugg (CH)
(72) Erfinder: MEIER, Dietrich, CH-5015 Niedererlinsbach (CH); SCHERTENLEIB, Werner, CH-5037 Muhen (CH)
(74) Vertreter: Stamer, Harald, Dipl,-Phys.
(86) Internationale Anmeldenummer: EP9700216
(87) Internationale Veröffentlichungsnummer: WO9727453

(56) Entgegenhaltungen:
- WO-A-95/35480
- DE-A- 3 214 998
- DE-A- 4 410 267
- US-A- 4 519 674
- ZEITSCHRIFT FUR VERMESSUNGSWESEN, JUNE 1988, WEST GERMANY, Bd. 113, Nr. 6, ISSN 0340-4560, Seiten 249-258, XP000671633 HEISTER H: "Zur Fehlausrichtung von Tripelprismen"

## Beschreibung

Die Erfindung betrifft einen Meßkugel-Reflektor für Richtungs- und/oder Abstandsmessungen.

Zur körperlichen Realisierung eines Zielpunktes für geodätische und industrielle Koordinatenmessungen werden häufig Meßkugeln verwendet. Dieses sind im allgemeinen metallische Kugeln mit einer spiegelnd reflektierenden Oberfläche, die auf einem Stift befestigt sind. Der Stift wird an dem anzumessenden Koordinatenpunkt im Gelände oder an dem Meßobjekt befestigt.

Die Kugel wird z. B. mit einem Zielfernrohr eines Theodoliten anvisiert und durch Fokussierung in einer Bildebene scharf abgebildet. Durch Ausrichtung einer Zielmarke bzw. eines Fadenkreuzes auf die Meßkugel wird die Zielrichtung des Theodoliten koordinatenmäßig festgelegt. Zur Erhöhung der Anzeigegenauigkeit wird oftmals eine spezielle Beleuchtungseinrichtung auf dem Theodolit verwendet und dabei der Lichtreflex auf der spiegelnden Kugeloberfläche als Zielpunkt genommen.

Durch Anvisieren derselben Meßkugel aus einer anderen Zielrichtung, z. B. mit einem weiteren Theodoliten, kann mit Hilfe der bekannten Entfernung der beiden Theodoliten die Entfernung zum Kugelmittelpunkt der Meßkugel berechnet werden. Da der Abstand des Kugelmittelpunktes zum Fußpunkt des Haltestiftes bekannt ist, können auf diese Weise die Koordinaten des Meßpunktes bestimmt werden. Beim Standardverfahren mit gleichzeitiger Messung eines Eichabstandes (Eichlatte) im Objektraum erübrigt sich die Ermittlung des Theodoliten-Abstandes. Zur Vereinfachung der eingesetzten Rechenprogramme sind die Dimensionierung der Meßkugel-Reflektoren und die Länge der Haltestifte normiert. Der Durchmesser der Meßkugel beträgt danach 12,7 mm.

Neben der Koordinatenmessung über zwei unabhängige Richtungsmessungen und Basisdistanz (Triangulation) ist es auch möglich, polar zu messen, d. h. eine Richtungsmessung mit einer Abstandsmessung zu kombinieren, d. h. einen Theodoliten mit einem Distanzmesser zu verbinden. Optische Absolut-Distanzmesser werten die Laufzeit von Lichtimpulsen oder modulierten Lichtstrahlen aus, die am Meßobjekt reflektiert werden. Zur genauen Koordinatenbestimmung eines Meßpunktes ist es wiederum erforderlich, den Zielpunkt körperlich zu realisieren. Da bei der Distanzmessung meistens mit einem parallel ausgerichteten Lichtstrahlenbündel gearbeitet wird, haben sich Tripelprismen als Zielreflektoren bewährt. Diese haben die Eigenschaft, daß ein in die Basisfläche eintretendes Parallelstrahlenbündel parallel in sich reflektiert wird, unabhängig von der Neigung der Basisfläche gegenüber der Lichtstrahlenrichtung.

Die Distanz wird bei senkrechtem Einfall durch den Glaskörper um eine feste Additionskonstante verändert. Der Zielpunkt für die Entfernungsmessung ist die Spitze des Tripelprismas. Da diese aus größeren Entfernungen optisch nicht anvisiert werden kann, ist für die Winkelmessung in der Geodäsie das Tripelprisma mit einer Zieltafel verbunden, die mit dem Theodoliten anvisiert wird. Aus der geometrischen Zuordnung zwischen Tripelprisma und Zieltafel sowie deren Halterung zum Meßpunkt können die Koordinaten des Meßpunktes von einem Standort aus bestimmt werden.

Wie bereits erwähnt, ist es eine wesentliche Eigenschaft des Tripelprismas, daß die Strahlreflexion parallel zum einfallenden Strahl unabhängig von der Neigung der Basisfläche des Tripelprismas zur Strahlrichtung ist. Die optische Weglänge ist aber von der Neigung der Basisfläche abhängig. Bei einer Neigung um die Prismenspitze wird der optische Weg nicht-linear proportinal zum Neigungswinkel größer. Eine gleiche Abhängigkeit ergibt sich bei einer Neigung um den Fußpunkt der Höhenlinie des Tripelprismas, wobei aber durch das Verändern des Ortes der Spitze der gesamte optische Weg verkleinert wird. Diese Veränderung des optischen Weges beeinflußt natürlich die Genauigkeit der Entfernungsmessung. Es ist bekannt, daß die Neigungsabhängigkeit über einen gewissen Winkelbereich minimiert werden kann, wenn die Neigung um einen auf der Höhenlinie des Tripelprismas liegenden Punkt erfolgt, der etwa 1/3 der Höhe von der Spitze entfernt ist.

Neben der visuellen Richtungsmessung kombiniert mit einer absoluten Distanzmessung sind auch Geräte bekannt, bei denen ausgehend von einer Startposition eine automatische Zielverfolgung und eine automatische Messung der Entfernungsänderung erfolgt. Die Verkörperung des Vorderflächen-Zielpunktes ist ein aus drei rechtwinklig zueinander stehenden Planspiegeln aufgebauter Tripelspiegel, der so innerhalb einer Kugel angeordnet ist, daß die Spitze des Reflektors auf dem Kugelmittelpunkt liegt. Im Gegensatz zu einem Tripelprisma treten bei einem Tripelspiegel keine von der Strahlrichtung abhängigen Ausrichtefehler und Distanzfehler auf.

Als Meßstrahl wird ein kollimiertes Laserstrahlenbündel verwendet, das über einen in drei Achsen steuerbaren Scanningspiegel auf den Tripelspiegel gerichtet wird. In der entfemungs- und richtungsmäßig bekannten Startposition wird der reflektierte Strahl über den Scanningspiegel in das Gerät zurückgeführt und dort sowohl von einem positionsempfindlichen Detektor gemessen als auch einem Interferometer zugeführt. Bei Entfernung der Kugel aus der Startpositon muß lediglich darauf geachtet werden, daß der Meßstrahl in die Öffnung des Tripelspiegels fällt. Da der Meßstrahlendurchmesser in den Grenzen der auf 1/e² abgefallenen Intensitätsverteilung etwa 4 mm beträgt, der Tripelspiegel aber eine Eintrittsöffnung von etwa 20 mm besitzt, ist dies problemlos möglich. Der positionsempfindliche Detektor steuert dann den Scanningspiegel dem bewegten Tripelspiegel nach, bis dieser im gewünschten Meßpunkt am Meßobjekt fixiert wird. Mit dem Interferometer wird der dabei zurückgelegte Weg gemessen. Aus der relativ zum Startpunkt gemessenen Richtungs- und Entfernungsänderung können dann die Koordinaten des Meßpunktes bestimmt werden.

Aus der Positionierung von in einem Arbeitsraum frei bewegbaren Robotern ist es bekannt, an definierten Stellen im Arbeitsraum Retroreflektoren als Referenzpunkte anzubringen. Ausgehend von einer Startposition wird der Sichtbereich des Roboters mit einem Laserstrahl über einen in drei Achsen steuerbaren Scanningspiegel abgescannt bis der Laserstrahl auf einen der Retroreflektoren fällt. Mit einem Absolutdistanzmesser wird die Entfernung zu den Retroreflektoren gemessen. Bei Bewegung des Roboters wird der Scanningspiegel der Richtung zum Retroreflektor nachgeführt, so daß die Richtungsänderungen des Roboters festgestellt werden können. Wenn die Sicht zu dem Retroreflektor verloren wird, müssen ein neuer Zielrichtungseinfang gestartet und eine neue Abstandsmessung zu einem anderen Retroreflektor gestartet werden.

In WO-A-95 35 480 wird auf einem Meßkugel-Reflektor hingewiesen, der auf einer Halterung aufliegt, so daß er frei drehbar ist.

Aus der DE 44 10 267 A1 ist eine Anordnung zum Kalibrieren einer in drei Koordinatenachsen messenden Meßmaschine bekannt. Auf dem Meßtisch wird ein Eckwürfelreflektor mit einer teilsphärischen Referenzoberfläche auf einem Ständer fest angeordnet. Der Ständer ist in einer Führung entlang einer der Koordinatenachsen der Meßmaschine verschiebbar.

Die Kalibrierung erfolgt in der Weise, daß einerseits die Lage der Referenzoberfläche des Eckwürfelreflektors mit einem Taststift ermittelt und andererseits die Längsverschiebung des retroreflektierenden Eckwürfels mit einem Interferometer gemessen wird. Der Retroreflektor weist einen Knotenpunkt auf, der auf der Meßachse des Interferometers liegt und um den sich der Retroreflektor neigen kann, ohne die Abstandsmessung signifikant zu beeinträchtigen. Die Referenzoberfläche ist relativ zum Knotenpunkt genau positioniert. Bei einer sphärischen Referenzoberfläche ist diese zum Knotenpunkt zentriert.

Der Knotenpunkt dient als Referenzmeßpunkt für die interferometrische Messung, und der Durchstoßpunkt der interferometrischen Meßachse mit der sphärischen Referenzoberfläche dient als Referenzmeßpunkt für den Taststift. Beide Referenzmeßpunkte liegen also in Meßrichtung hintereinander. Außerdem ist die Führungsbahn für den Ständer gegenüber der Meßachse des Interferometers parallel versetzt. Ungenauigkeiten in der Führungsbahn führen zu einem transversalen Versatz des Kontenpunktes und zu Kippungen des Retroreflektors um den Fußpunkt des Ständers, so daß ebenfalls eine Verlagerung des Knotenpunktes resultiert.

Da der Knotenpunkt als Referenzmeßpunkt für die interferometrische Abstandsmessung dient, bedeutet jede transversale Verlagerung eine Veränderung der Meßrichtung gegenüber der zu kalibrierenden Koordinatenrichtung der Meßmaschine. Um die daraus folgenden Meßfehler gering halten zu können, muß auf eine möglichst präzise Führungsbahn geachtet werden. Zusätzlich kann durch Antastung der sphärischen Referenzoberfläche in drei verschiedenen Positionen die transversale Ablage gemessen und in einer Ausgleichsrechnung berücksichtigt werden.

Bei Tripelspiegeln kann aus mechanischen Gründen eine bestimmte Baugröße nicht unterschritten werden, da die Spiegel für ihre Stabilität eine gewisse Dicke aufweisen müssen. Ein anderer Nachteil besteht darin, daß sich in der offenen Spitze des Reflektors Verunreinigungen, wie z. B. Staubkörner, festsetzen können, die schwierig zu entfernen sind und dabei auch die Gefahr einer Verletzung der metallischen Spiegelschicht besteht. Die Strahlenreflexion in der Spiegelspitze ist jedoch für die Meßgenauigkeit entscheidend. Außerdem ist zu beachten, daß die Güte der inneren Kanten des Tripelspiegels wegen der Kittung der drei Planspiegelelemente Probleme bereitet.

Der Erfindung liegt die Aufgabe zurgunde, einen Meßkugel-Reflektor anzugeben, der sowohl für visuelle als auch automatische Richtungsbestimmung geeignet ist, und der sowohl für eine absolute als auch relative Distanzmessung einsetzbar ist. Darüber hinaus sollte seine Dimensionierung entsprechend der Normgröße bekannter Meßkugel-Reflektoren möglich sein.

Diese Aufgabe wird bei einem Meßkugel-Reflektor der eingangs genannten Art dadurch gelöst, daß in die Meßkugel ein retroreflektierendes Tripelprisma eingesetzt ist, dessen Basisfläche einen Teil der Meßkugel-Oberfläche ausschneidet und dessen Höhe ungefähr gleich dem Radius der Meßkugel ist, wobei das Zentrum der Meßkugel auf der Höhenlinie des Tripelprismas liegt.

Vorteilhafte Ausgestaltungen dieser Konstruktion ergeben sich aus den Merkmalen der abhängigen Ansprüche.

Gegenüber einem aus Spiegeln zusammengesetzten Tripelspiegel hat ein Tripelprisma den Vorteil, daß es beliebig klein dimensioniert werden kann. Insbesondere kann es dem genormten Durchmesser einer Meßkugel von 12,7 mm optimal angepaßt werden, wobei gleichzeitig noch eine gute Anpassung der Größe der Basisfläche an den Durchmesser des Laserstrahls für ein Interferometer, die Winkelmessung und einen Absolutdistanzmesser und auch eine spezielle Reserve für einen ausreichenden Neigungswinkel gegenüber der Strahlrichtung gegeben sind.

Bei einem Tripelprisma entfallen darüber hinaus die auftretenden Probleme bei einer Verunreinigung der Reflektorspitze. Außerdem können die Kanten des Tripelprismas optimal fein gemacht werden.

Durch die erfindungsgemäß vorgesehene Höhe des Tripelprismas ist es möglich, den durch den Kugelmittelpunkt vorgegebenen Drehpunkt in das Tripelprisma hinein zu verlegen. Damit ist eine Minimierung der neigungsabhängigen optischen Wegunterschiede in dem Tripelprisma möglich.

Da bei einer automatischen Koordinatenmessung die Spitze des Tripelprismas nicht nur Zielpunkt für die Abstandsmessung ist, sondern auch die Zielrichtung festlegt, war zu untersuchen, inwieweit bei einer Neigung des Tripelprismas um einen unterhalb der Spitze liegenden Punkt die Richtungsmessung verfälscht wird. Überraschenderweise hat sich dabei ergeben, daß derselbe Drehpunkt, bei dem die optischen Wegunterschiede über den Neigungsbereich gleichmäßig minimiert sind, auch die Winkelabweichung durch Auswandern der Spitze des Tripelprismas minimiert.

Da die Basisfläche des Tripelprismas nur einen Teil der Oberfläche der Meßkugel einnimmt, kann der verbleibende Teil spiegelnd ausgeführt sein, so daß weiterhin ein visuelles Anvisieren möglich ist. Wird die Meßkugel aus einem magnetischen Material hergestellt, kann die Befestigung auf dem üblichen Schaft durch Magnetkraft erfolgen, wobei die Auflage eine Dreipunktlagerung sein kann, so daß die Meßkugel in alle Richtungen gedreht werden kann. Das ermöglicht bei im Meßpunkt fest eingespanntem Schaft sowohl eine einfache Ausrichtung auf den Meßstrahl, als auch eine optimale Einstellung der spiegelnden Fläche auf die Visierrichtung aus zwei unterschiedlichen Meßgeräten. Außerdem kann die Meßkugel bei Verwendung eines Zielverfolgungssystems mit relativer Abstandsmessung von einem Meßpunkt zum anderen verlegt werden.

Durch Reduzierung der dreieckigen Basisfläche des Tripelprismas und des daran anschließenden Prismenbereichs auf einen zur Höhenlinie rotationssymmetrischen Zylinder wird eine besonders einfache Montage für das Einsetzen des Prismas in die Meßkugel geschaffen. In die Kugel braucht lediglich eine zentrische Bohrung eingebracht zu werden, in die das Tripelprisma eingesetzt wird. Die kreisförmige Basisfläche kann dabei mit dem Bohrungsrand abschließen oder gerinfügig unterhalb dieses Randes liegen, so daß sie vor Beschädigungen bei Auflegen der Meßkugel auf einer ebenen Unterlage geschützt ist.

Der erfindungsgemäße Meßkugel-Reflektor wird nachstehend anhand eines in der Zeichnung schematisch dargestellten Ausführungsbeispiels näher beschrieben. Dabei zeigen
- Fig. 1: einen Schnitt durch den Meßkugel-Reflektor
- Fig. 2: eine Draufsicht auf den Meßkugel-Reflektor
- Fig. 3: eine Draufsicht auf das vollständige Tripelprisma
- Fig. 4: einen Schnitt durch das Tripelprisma längs einer Dachkante

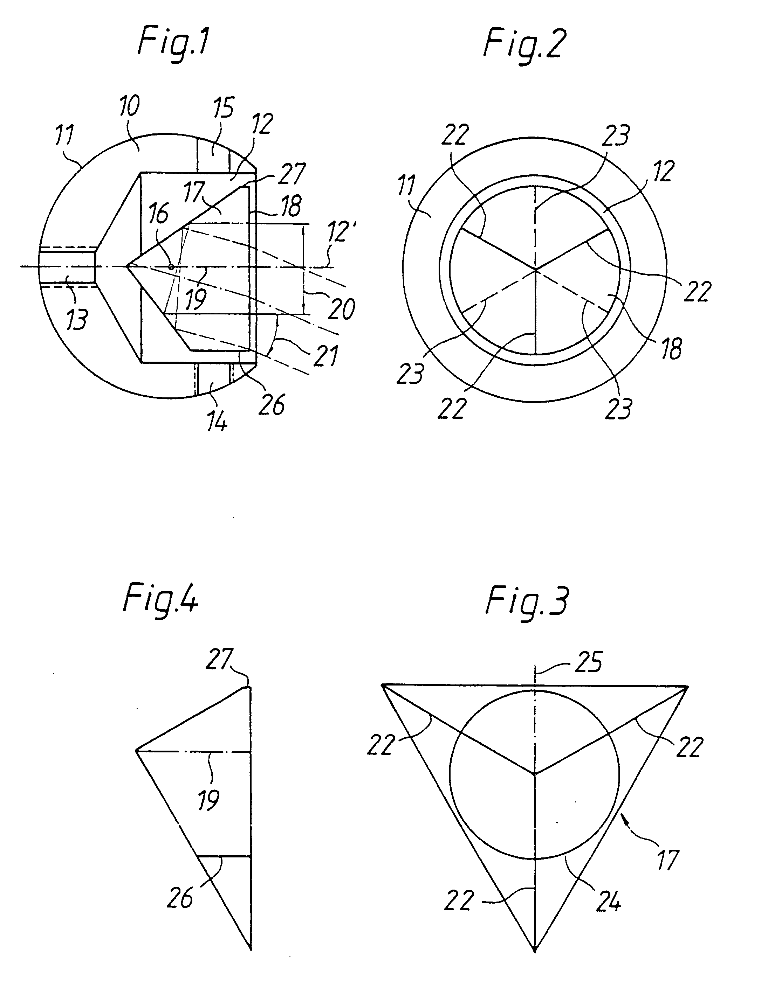

In Fig. 1 ist im Schnitt eine Meßkugel 10 dargestellt. Sie besteht aus einem magnetischen Metall. Ihre Oberfläche 11 ist spiegelnd poliert. In den Kugelkörper ist zentrisch eine Bohrung 12 eingebracht. Das Zentrum des Kugelkörpers ist mit 16 bezeichnet. In die Bohrung 12 weist eine Gewindebohrung 13, die auf die Spitze des noch zu beschreibenden Tripelprismas gerichtet ist. Eine weitere Gewindebohrung 14 steht senkrecht dazu. Ihr gegenüber befindet sich ein Einfülloch 15 für einen Kitt. Weitere Paare 14/15 befinden sich jeweils 60° versetzt auf dem Umfang des Kugelkörpers.

In die Bohrung 12 ist ein Tripelprisma 17 eingesetzt. Dieses besteht aus einem optischen Glas. Die Dachflächen sind metallisch belegt und mit Schutzlack geschützt. Die Basisfläche 18 ist kreisförmig. Sie liegt zum Schutz gegen Beschädigungen bei der Ablage der Meßkugel auf einer ebenen Fläche geringfügig tiefer als der Rand der Bohrung 12. Die Höhenlinie des Tripelprismas 17 ist mit 19 bezeichnet. Das Zentrum 16 des Kugelkörpers liegt etwa ein Drittel der Höhe des Tripelprismas unterhalb der Spitze.

Zur Ausrichtung der Basisfläche 18 des Tripelprismas 17 senkrecht zur Achse 12' der Bohrung 12 werden Stifte in die Gewindebohrungen 13/14 eingedreht. Dabei können auch Fertigungstoleranzen in der Höhe des Tripelprismas, die zu unterschiedlichen optischen Wegen in dem Prisma führen, ausgeglichen werden, indem die Lage der Spitze zum Drehpunkt auf eine einheitliche Additionskonstante für den Glasweg abgeglichen wird. Nach der Ausrichtung wird durch die Einfüllöcher 15 ein geeigneter Kitt in die Bohrung 12 eingebracht, der das Tripelprisma 17 fixiert und gegen thermische Spannungen und Erschütterungen sichert. Dabei hat sich ein Silikonkitt besonders bewährt.

Das von dem dargestellten Meßkugel-Reflektor aufgenommene Meßstrahlenbündel weist einen Durchmesser 20 auf. Die Basisfläche 18 des Tripelprismas 17 kann gegenüber diesem Strahlenbündel um einen Winkel 21 nach allen Richtungen geneigt werden, ohne daß sich die Qualität des aus dem reflektierten Strahlenbündel abgeleiteten Meßsignals verschlechtert und ohne daß die Genauigkeit der Richtungs- und Abstandsmessung aus dem geforderten Toleranzbereich herausfallen.

In einem praktischen Ausführungsbeispiel konnte in einer Meßkugel vom Normdurchmesser 12,7 mm (0,5") ein Tripelprisma eingesetzt werden, das ein Meßstrahlenbündel von etwa 4,5 mm Durchmesser innerhalb eines Neigungsbereichs von ±15° sicher reflektiert. Der Distanzfehler lag dabei bei etwa 1,5 µm. Der Richtungswinkelfehler entsprach dabei einer Ablage des Zielpunktes von etwa ±10µm.

In Fig. 2 ist der Meßkugel-Reflektor in einer Draufsicht auf die Basisfläche 18 des Tripelprismas 17 gezeigt, um die kreisförmige Strahleneintrittsfläche darzustellen. In der Draufsicht sichtbar sind die auf die Spitze zulaufenden Dachkanten 22 und ihre Reflexionen 23 an den gegenüberliegenden Dachflächen.

Fig. 3 zeigt eine Draufsicht auf das vollständige Tripelprisma 17 und einen zentrisch zum Fußpunkt der Höhenlinie unter der Spitze des Prismas liegenden Innenkreis 24, der den Querschnitt des Zylinders bildet, auf den die Basis des Tripelprismas reduziert wird.

Fig. 4 zeigt einen Querschnitt durch das Tripelprisma nach Fig. 3 längs der Schnittlinie 25. Die Reduktion des Basisbereichs auf einen Zylinder führt dabei zu unterschiedlich hohen Seitenflächen 26/27, wie sie auch in Fig. 1 dargestellt sind. Die Justierstifte werden zweckmäßigerweise auf die höheren Seitenflächen 26 gerichtet.

## Patentansprüche

1. Meßkugel-Reflektor für berührungslose Richtungs- und/oder Abstandsmessungen, wobei die Meßkugel in einer Auflage frei drehbar gehalten wird, **dadurch gekennzeichnet**, daß in die Meßkugel (10) ein retroreflektierendes Tripelprisma (17) eingesetzt ist, dessen Basisfläche (18) einen Teil der Meßkugel-Oberfläche (11) in der Weise ausschneidet, daß die Umfangslinie der Basisfläche (18) des Tripelprismas (17) unter der Oberfläche (11) der Meßkugel (10) liegt und dessen Höhe ungefähr gleich dem Radius der Meßkugel (10) ist, wobei das Zentrum (16) der Meßkugel (10) auf der Höhenlinie (19) des Tripelprismas (17) liegt.

2. Meßkugel-Reflektor nach Anspruch 1, **dadurch gekennzeichnet**, daß der Abstand der Spitze des Tripelprismas (17) vom Zentrum (16) der Meßkugel (10) etwa ein Drittel der Höhe des Tripelprismas (17) beträgt.

3. Meßkugel-Reflektor nach einem der vorhergehenden Ansprüche, **dadurch gekennzeichnet**, daß das Tripelprisma (17) in seinem Basisbereich auf einen zur Höhenlinie (19) rotationssymmetrischen Zylinder reduziert ist.

4. Meßkugel-Reflektor nach einem der vorhegehenden Ansprüche, **dadurch gekennzeichnet**, daß die Meßkugel (10) eine Bohrung (12) aufweist, in die das Tripelprisma (17) eingefügt ist.

5. Meßkugel-Reflektor nach Anspruch 4, **dadurch gekennzeichnet**, daß in die Bohrung (12) von außen zugängliche Justierelemente hineinragen, auf denen das Tripelprisma (17) aufliegt.

6. Meßkugel-Reflektor nach Anspruch 5, **dadurch gekennzeichnet**, daß das Tripelprisma (17) nach seiner Justierung in der Bohrung (12) durch einen dauerelastischen Kitt fixiert ist.

7. Meßkugel-Reflektor nach einem der vorhergehenden Ansprüche, **dadurch gekennzeichnet**, daß die Oberfläche (11) der Meßkugel (10) spiegelnd ist.

8. Meßkugel-Reflektor nach einem der vorhergehenden Ansprüche, **dadurch gekennzeichnet**, daß die Meßkugel (10) aus magnetischem Material besteht.

## Claims

1. Measuring ball reflector for contactless direction and/or distance measurements, the measuring ball being held in a freely rotatable fashion in a support, characterized in that a retroreflecting triple prism (17) is inserted into the measuring ball (10), the base face (18) of which triple prism cuts out a part of the surface (11) of the measuring ball in such a way that the circumferential line of the base face (18) of the triple prism (17) is located below the surface (11) of the measuring ball (10), and the height of which triple prism is approximately equal to the radius of the measuring ball (10), the centre (16) of the measuring ball (10) being located at the altitude (19) of the triple prism (17).

2. Measuring ball reflector according to Claim 1, characterized in that the distance from the vertex of the triple prism (17) to the centre (16) of the measuring ball (10) is approximately a third of the height of the triple prism (17).

3. Measuring ball reflector according to any of the preceding Claims, characterized in that the triple prism (17) is reduced in its base region to a cylinder which is rotationally symmetrical relative to the altitude (19).

4. Measuring ball reflector according to any of the preceding Claims, characterized in that the measuring ball (10) has a bore (12) into which the triple prism (17) is inserted.

5. Measuring ball reflector according to Claim 4, characterized in that externally accessible adjusting elements on which the triple prism (17) rests project into the bore (12).

6. Measuring ball reflector according to Claim 5, characterized in that, after its adjustment, the triple prism (17) is fixed in the bore (12) by a permanently elastic cement.

7. Measuring ball reflector according to any of the preceding Claims, characterized in that the surface (11) of the measuring ball (10) is reflective.

8. Measuring ball reflector according to any of the preceding Claims, characterized in that the measuring ball (10) consists of magnetic material.

## Revendications

1. Réflecteur de bille de mesure pour des mesures de direction et/ou d'espacement sans contact, la bille de mesure étant maintenue en pouvant tourner librement dans un support, caractérisé en ce que dans la bille de mesure (10) est inséré un prisme triple (17) à rétroréflection, dont la face de base (18) coupe une partie de la surface (11) de la bille de mesure, en ce que la ligne périphérique de la phase de base (18) du prisme triple (17) est située au-dessous de la surface (11) de la bille de mesure (10) et sa hauteur étant à peu près égale au rayon de la bille de mesure (10), le centre (16) de la bille de mesure (10) étant situé sur la ligne de hauteur (19) du prisme triple (17).

2. Réflecteur de bille selon la revendication 1, caractérisé en ce que l'espacement de la pointe du prisme triple (17) vis-à-vis du centre (16) de la bille de mesure (10) est d'environ un tiers de la hauteur du prisme triple (17).

3. Réflecteur de bille selon l'une des revendications précédentes, caractérisé en ce que le prisme triple (17) est réduit dans sa zone de base à un cylindre répondant à une symétrie de rotation par rapport à la ligne de hauteur (19).

4. Réflecteur de bille selon l'une des revendications précédentes, caractérisé en ce que la bille de mesure (10) présente un perçage (12) dans lequel le prisme triple (17) est inséré.

5. Réflecteur de bille selon la revendication 4, caractérisé en ce que dans le perçage (12) pénètrent des éléments d'ajustement accessibles depuis l'extérieur, sur lesquels repose le prisme triple (17).

6. Réflecteur de bille selon la revendication 5, caractérisé en ce que le prisme triple (17) est fixé, après son ajustement dans le perçage (12), au moyen d'un mastic présentant une élasticité durable.

7. Réflecteur de bille de mesure selon l'une des revendications précédentes, caractérisé en ce que la surface (11) de la bille de mesure (10) est réfléchissante.

8. Réflecteur de bille de mesure selon l'une des revendications précédentes, caractérisé en ce que la bille de mesure (10) est constituée d'un matériau magnétique.
